# EUROPÄISCHE PATENTSCHRIFT

(11) **EP 2 910 654 B1**
(45) Veröffentlichungstag und Bekanntmachung des Hinweises auf die Patenterteilung: **02.01.2019**
(21) Anmeldenummer: 15154899.7
(22) Anmeldetag: 12.02.2015
(51) Int. Cl.: C22B 3/12, C01F 17/00, C22B 7/00, C22B 59/00

(54) **Verfahren zur Rückgewinnung und gegebenenfalls Trennung von Lanthaniden in Form ihrer Chloride oder Oxide aus mineralischen Abfällen und Reststoffen**
Method for recovering and optionally separating lanthanides in the form of their chlorides or oxides from mineral waste and residual materials
Procédé de récupération et éventuellement de séparation de lanthanides sous forme de ses chlorures ou oxydes à partir de déchets et résidus minéraux

(30) Priorität: 12.02.2014 DE 102014101766
(43) Veröffentlichungstag der Anmeldung: 26.08.2015
(73) Patentinhaber: Fraunhofer-Gesellschaft zur Förderung der angewandten Forschung e.V., 80686 München (DE)
(72) Erfinder: Brämer, Thilo, 63486 Bruchköbel (DE); Gellermann, Carsten, 97218 Gerbrunn (DE); Kilo, Martin, 97299 Zell am Main (DE); Brämer, Wulf, 63486 Bruchköbel (DE)
(74) Vertreter: Strehl Schübel-Hopf & Partner

(56) Entgegenhaltungen:
- JIANG Y ET AL: "A hydrometallurgical process for extraction of lanthanum, yttrium and gadolinium from spent optical glass", HYDROMETALLURGY, ELSEVIER SCIENTIFIC PUBLISHING CY. AMSTERDAM, NL, Bd. 76, Nr. 1-2, 1. Januar 2005 (2005-01-01), Seiten 1-9, XP027652464, ISSN: 0304-386X [gefunden am 2005-01-01]
- GUPTA C K ET AL: "Extractive Metallurgy of rare earths", INTERNATIONAL MATERIALS REVIEWS, ASM INTERNATIONAL, MATERIALS PARK, US, Bd. 37, Nr. 5, 1. Januar 1992 (1992-01-01) , Seiten 197-248, XP002717729, ISSN: 0950-6608
- P. BALAZ: "Mechanical activation in hydrometallurgy", INTERNATIONAL JOURNAL OF MINERAL PROCESSING, Bd. 72, 2003, Seiten 341-354, XP002741653,
- P. BALAZ, E. DUTKOVA: "Fine milling in applied mechanochemistry", MINERALS ENGINEERING, Bd. 22, 2009, Seiten 681-694, XP002741654,
- ZHANG ET AL: "A soft-solution process for recovering rare metals from metal/alloy-wastes by grinding and washing with water", JOURNAL OF HAZARDOUS MATERIALS, ELSEVIER, AMSTERDAM, NL, Bd. 139, Nr. 3, 13. Januar 2007 (2007-01-13), Seiten 438-442, XP005829963, ISSN: 0304-3894, DOI: 10.1016/J.JHAZMAT.2006.02.058
- KOEN BINNEMANS ET AL: "Recycling of rare earths: a critical review", JOURNAL OF CLEANER PRODUCTION, Bd. 51, 1. Juli 2013 (2013-07-01), Seiten 1-22, XP055109592, ISSN: 0959-6526, DOI: 10.1016/j.jclepro.2012.12.037
- Mio H; Lee J; Nakagawa T: "Estimation of extraction rate of yttrium from fluorescent powder by ball milling", Materials Transactions, 1 November 2001 (2001-11-01), pages 2460-2464, XP055280668, Retrieved from the Internet: URL:https://www.jstage.jst.go.jp/article/m atertrans/42/11/42_11_2460/_pdf [retrieved on 2016-06-15]
- HATTORI: "Leaching and Separation of Rare Earth Elements from Waste Fluorescent Powder", KAGAKU KOGAKU RONBUNSHU, KAGAKU KOGAKKAI, TOKYO, JP, vol. 39, no. 5, 1 January 2013 (2013-01-01), pages 472-478, XP009190518, ISSN: 0386-216X

## Beschreibung

Die Erfindung betrifft ein mechanochemisches Verfahren zur Aufbereitung von mineralischen Abfällen, Reststoffen, Verbundwerkstoffen oder Stoffverbünden, die eine oder mehrere anorganische, insbesondere mineralische und/oder glasartige Komponenten aufweisen. In den meisten Fällen und bevorzugt, aber nicht notwendigerweise, handelt es sich um silikatische Materialien und Komponenten. Hierunter fallen insbesondere Schlacken, Stäube und Aschen, z.B. aus der Abfall- und Energiewirtschaft, silikatische Gläser (Behälterglas, Flachglas) sowie sonstige, insbesondere optische Gläser wie Lanthangläser, deren Hauptbestandteile z.B. Borate sein können, sowie Verbundabfälle aus dem Bereich der Elektronik wie z.B. LEDs oder Leiterplatten. Die mit dem Verfahren verbundene Zielsetzung liegt dabei in der Rückgewinnung mindestens eines Teils oder des gesamten Anteils an darin enthaltenen Lanthaniden in Form von reinen Metallverbindungen, insbesondere von Metallsalzen wie den Chloriden oder in Form ihrer Oxide.

Unter "Seltenen Erden" bzw. "Lanthaniden" versteht die vorliegende Erfindung das Lanthan selbst (Ordnungszahl 57) sowie die Elemente der Ordnungszahlen 58 bis 71, nicht aber Scandium und Yttrium. Die Seltenen Erden bzw. Lanthaniden werden nachstehend kumulativ mit [SE] abgekürzt. Sie umfassen die Elemente von Cer bis Lutetium. Es sind teure und rare Wertstoffe, und mithilfe des vorliegenden Verfahrens können sie wiedergewonnen und als Rohstoffe in der Herstellung von hochwertigen Produkten in der optischen, der Halbleiter- oder auch der Elektronikindustrie oder dergleichen abermals eingesetzt werden. Die erfindungsgemäße Aufbereitung gelingt mit einem mehrstufigen Verfahren, welches eine mechanochemische Behandlung, eine alkalische Auslaugung, bei Bedarf die Abtrennung unerwünschter Begleitmetallkationen durch eine oder mehrere Fällungsreaktionen und/oder eine organische Extraktion und schließlich bei Bedarf eine organische Flüssig-Flüssig-Extraktion zur selektiven Gewinnung von Lanthan bzw. weiterer Lanthaniden umfasst.

Üblicherweise werden glasartige Abfälle einem werkstofflichen Recycling unterzogen, das darauf abzielt, das Altglas durch Abtrennung von Fremdstoffen (Metallen, Kunststoffen und dergleichen) und Gebrauchsverunreinigungen soweit aufzureinigen, dass es anschließend als Sekundärmaterial in Form von Scherben oder Pulver dem Glasschmelzprozess hinzugefügt werden kann. Hierfür ist es notwendig, die Einsatzmenge von störenden Fremdoxiden, metallischen und organischen Werkstoffen sowie von keramischem Material, sogenanntem KSP (Keramik, Steine, Porzellan) und Glaskeramik zu befreien, die sich in einem Glasschmelzprozess auflösen und im Glasgegenstand dann eine Farbwirkung hervorrufen können. Die Hauptverunreinigungen sind Eisenoxide, und in geringerem Umfang kommen Oxide der Elemente Ni, V, Cu, Mn und Cr vor. Darüber hinaus beeinflussen metallische Werkstoffe die Schmelze und die Schmelzöfen. Sn-, Pb- und Cu-Werkstoffe schmelzen bei den herrschenden Temperaturen und sinken auf den Wannenboden, wo sie eine verstärkte Bodenkorrosion hervorrufen. Al- und Zn-Werkstoffe werden vollständig und Fe-Werkstoffe zum Teil oxidiert und als Oxide in der Glasschmelze gelöst. Aluminium reduziert dabei geringe Mengen an SiO₂ zu Si, das als Si-Einschluss zu Glasbruch bei den Erzeugnissen führt. Zuletzt wirken sich anheftende organische Stoffe (Papier, Kunststoffe, etc...) durch ihre Verbrennung negativ auf die Redoxbedingungen in der Schmelze und damit auf die Läuterung aus.

Die Befreiung von Verunreinigungen erfolgt bei silikatischen Gläsern (Behälterglas, Flachglas und dergleichen) überwiegend mechanisch. Dabei werden die Altglasfraktionen zunächst mittels Brechern und Mühlen auf die gewünschte Korngröße zerkleinert und anschließend mittels mechanischer Sortierprozesse wie Magnetscheidung, Wirbelstromscheidung, Windsichtung etc. von den metallischen Verunreinigungen befreit. Zusätzlich werden optische Sortierverfahren für die Abtrennung von keramischem Material, Glaskeramik sowie Fehlfarbengläsern eingesetzt.

Dazu ist die Aufbereitung und Sortierung mittels Farbzeilenkameras bekannt, die zum einen auf Basis von Röntgentransmission sowie zum anderen auf Basis von optischen Anregern und Sensoren im NIR-Bereich die Trennung von metallischen bzw. sonstigen nicht transparenten Störstoffen wie KSP (Keramik, Steine, Porzellan) realisiert.

Für die Aufbereitung von Verbundgläsern, beispielsweise aus dem Automobilbereich, wird zur Trennung des Verbundsystems "Funktionsschicht-Glas" dem beschriebenem Aufbereitungsprozess ein Verfahren zur Delamination vorangestellt, das, wie aus DE 198 11 199 A1 bekannt, üblicherweise auf der Trennung des zerkleinerten Verbundglases in einem organischen Lösungsmittel oder wie in EP 0567876 A1 dargelegt auf Einwirkung von heißen konzentrierten Säuren oder Laugen beruht.

Nachteilig an den beschriebenen Verfahren ist der Tatbestand, dass alle Behandlungsmethoden die Beibehaltung der Glasstruktur und den damit verbundenen Wiedereinsatz als Scherben zum Ziel haben. Die abgetrennten Verunreinigungen stellen Mischfraktionen zum einen aus Metallen, Metalloxiden und Kunststoffen sowie zum anderen Fraktionen bestehend aus Keramik, Glaskeramiken und Fehlfarbengläsern dar, wobei die ersteren aufgrund ihres geringen Wertstoffgehalts und damit Werts sowie der Notwendigkeit einer sehr aufwändigen Aufbereitung keiner weiteren Behandlung unterzogen, sondern entsorgt werden müssen.

Eine Aufbereitung von Spezialgläsern wie z.B. Quarzglas aus der Solar- und Halbleiterindustrie hat zum Ziel, das Altglas von metallischen Verunreinigungen zu befreien, die elementar im niederen ppm- bis hin in den ppb-Bereich homogen über das ganze Glas verteilt vorliegen. Aus WO 2011/003777 A1 sind dazu für die Trennung der Metalle vom Glas Verfahren der elektrodynamischen Zerkleinerung bekannt, die auf Basis von Hochspannungsimpulsen den Unterschied in der Durchschlagfestigkeit zwischen dem Material und dem umgebenden Prozessmedium Wasser ausnutzen. Dabei stellen Defekte in der Kristallstruktur des Glases eine dielektrische Diskontinuität dar, die zu einer elektrischen Feldüberhöhung führt. Dies führt dazu, dass sich die Hochspannungsimpulse vornehmlich an den Korn- und Phasengrenzen entladen und die metallischen Verunreinigungen damit freilegen. Die getrennten Fraktionen werden im Anschluss flotiert und die restlichen Fremdelemente abschließend durch Säurelaugung vom Glasmaterial getrennt.

Zur Aufreinigung in den ppb-Bereich hinein ist aus der Glasindustrie ein Verfahren aus der Reihe der chemischen Gasphasenreaktionen bekannt, wonach minimale Verunreinigungen halogeniert, bevorzugt chloriert (Heißchlorierung) und anschließend in der Gasphase entfernt werden.

Das erstere Verfahren birgt den Nachteil, dass nur Fraktionen abgetrennt werden können, die elementar im Glas vorliegen. Homogen in Glasphasen verteilte Metalle können aufgrund der geringen dielektrischen Unterschiede durch Hochspannungsimpulse nicht sauber aufgetrennt werden, so dass das Verfahren in diesen Fällen nicht einsetzbar ist. Ebenso ist die Heißchlorierung des letztgenannten Verfahrens nur dann effektiv, wenn elementar vorliegende Metalle mit dem Chlorgas vollständig zu einem gasförmigen Produkt reagieren können. Mineralische, mit metallischen Verunreinigungen versetzte Phasen sind dazu nicht geeignet.

Sonstige mineralische Abfälle und Reststoffe wie Schlacken und Aschen werden zum gegenwärtigen Zeitpunkt weitestgehend deponiert. Darüber hinaus gibt es jedoch Ansätze, auch aus diesen Materialien Wertstoffe wie beispielsweise Zink zurückzugewinnen. Die dazu eingesetzten Verfahren verfolgen zumeist einen pyrometallurgischen Ansatz. Nach WO 2008/141347 A1 werden dazu die Abfälle und Reststoffe eingeschmolzen und über ein induktiv beheiztes Koksbett geleitet. Dabei werden Metalloxide zu elementarem Metall reduziert und in schmelzflüssiger Form am Fußende abgestochen. Das Verfahren ist derzeit lediglich für Wertstoffe wie Zink und Blei erprobt. Darüber hinaus fällt beim Abstich neben dem abgetrennten Wertstoff ein erheblicher Anteil an Schlackenmaterial an, das entweder deponiert wird oder abermals einem Aufbereitungsprozess zugeführt werden müsste. Diese Tatsache, verbunden mit der bisher sehr eingeschränkten Anwendbarkeit, zeigt, dass das genannte Verfahren einige umweltspezifische und ökonomische Herausforderungen nicht bewältigen kann, so dass es sich für die Herstellung hochreiner Sekundärrohstoffe nicht eignet.

Aus JP-A 1999-071111 ist ein Verfahren zur Extraktion von Selten-Erd-Verbindungen aus Leuchtstoffen bekannt, worin eine Substanz mechanochemisch vorbehandelt wird, um die Kristallstruktur zu ändern. Anschließend wird die Substanz mit einer Säure behandelt, um die Selten-Erd-Verbindungen zu extrahieren. Das Produkt dieses Verfahrens ist ein Selten-Erd-Gemisch, das in Form entsprechender Verbindungen in Leuchtstoffen wiederum als Rohstoff eingesetzt werden soll. Daher verzichtet das Verfahren auf die Abtrennung bestimmter Begleitelemente, da diese bei der Herstellung von Primärleuchtstoff ohnehin beigemengt werden. Unter "Seltenen Erden" werden in JP-A 1999-071111 alle Elemente der III. Gruppe der Übergangsmetalle subsumiert, also neben den Lanthaniden auch Yttrium, Scandium und das Lanthan selbst. Scandium ist allerdings kein seltenes Element; vielmehr kommt es in der Natur relativ häufig, allerdings sehr stark verteilt vor. Yttrium ist Bestandteil vieler Mineralien wie Gadolinit, Thalenit oder Euxenit. Beide Elemente verhalten sich chemisch sehr ähnlich wie Aluminium; Yttriumvanadat findet als Fluoreszenz-Feststoff (rot leuchtend) in der Farbfernsehtechnik Verwendung. Für die Darstellung reiner Wertstoffe aus der Gruppe der Lanthaniden sind diese beiden Elemente nicht von Interesse.

Unter dem Sammelbegriff Monazit werden Mineralien zusammengefasst, die im Wesentlichen aus Phosphaten der Seltenen Erden bestehen. Es handelt sich immer um Mischverbindungen; die am häufigsten auftretenden Seltenerd-Kationen sind Lanthan, Cer, Neodym und Samarium; sie können aber auch Gadolinium, Thorium und/oder Uran enthalten. Monazit dient der Primärgewinnung dieser Elemente. Gemäß US 2,811,411 führt dessen Behandlung mit großen Überschüssen an Natriumhydroxid-Lösung zu einer Umwandlung der Thorium-, Uran- und Seltenerd-Phosphate in deren hydratisierte Oxide, die mit Ausnahme der Uranverbindungen unlöslich in Natriumhydroxid sind, wobei weiterhin wasser- und laugenlösliches Natriumphosphat entsteht. In dieser Druckschrift wird vorgeschlagen, die Auslaugung von feingemahlenem Monazit mit konzentrierter Natriumhydroxid-Lösung bei 135° bis 220°C vorzunehmen, damit möglichst wenig Uran bei der Umwandlung durch die Laugenbehandlung in Lösung und damit verloren geht. Der verbliebene Festkörper wird gewaschen und mit Salpetersäure behandelt, wobei sich Seltenerd-Hydroxide sowie die Hydroxide des Thoriums und des Urans lösen. Die Festkörper-Umwandlung von Monazit nutzt auch US 8,486,354 B2. Im dort offenbarten Verfahren wird Monazit in einer Planetenkugelmühle mit festem Natriumhydroxid vermahlen. Infolge des Energieeintrags unter Zerkleinerung der Komponenten und konstanter Kollisionen der Partikel unter zeitweiligem Erreichen von sehr hohen Temperaturen tritt eine Veränderung der physikalischen und chemischen Charakteristika der Partikel ein; der Durchmesser der Teilchen verringert sind, und ihre Kristallstruktur wird zerstört. Die Seltenen Erden des Monazit werden hierbei in ihre Hydroxide überführt, während sich gleichzeitig Natriumphosphat bildet, was auf den mechanochemischen Effekt des Mahlens zurückgeführt wird. Das Natriumphosphat wird anschließend durch Waschen in destilliertem Wasser gelöst, und die Hydroxide werden in Schwefelsäure gelöst und extrahiert.

JIANG Y ET AL: "A hydrometallurgical process for extraction of lanthanum, yttrium and gadolinium from spent optical glass", HYDROMETALLURGY, ELSEVIER SCIENTIFIC PUBLISHING CY. AMSTERDAM, NL, Bd. 76, Nr. 1-2, 1. Januar 2005 (2005-01-01), Seiten 1-9 offenbart ein Verfahren zur Behandlung von Glaspartikeln mit Natriumhydroxid und die Behandlung der ausgefallenen Hydroxide mit einer Säure.

Der Erfindung liegt die Aufgabe zugrunde, ein Verfahren zur Aufarbeitung für mineralische Abfälle, Reststoffe, Verbundwerkstoffe oder Stoffverbünde bereitzustellen, die eine oder mehrere anorganische, insbesondere mineralische und/oder glasartige Komponenten aufweisen. Dieses Verfahren soll es ermöglichen, darin enthaltene Elemente aus der Gruppe der der Seltenen Erden, die homogen in anorganischen, mineralischen Gittern oder Gläsern oder glasartigen Schlacken oder sonstigen anorganischen Abfallmaterialien eingebaut sind, zunächst aus ihrer Umgebung, meist einem Mineral, freizulegen, danach von verbliebenen störenden Begleitelementen zu trennen und, soweit erforderlich, voneinander zu separieren, so dass Lanthan und/oder entsprechende Lanthaniden in Form einer jeweils reinen Verbindung oder auf Wunsch als hochreines Oxid rückgewonnen werden.

Die gestellte Aufgabe wird durch ein Verfahren gelöst, umfassend die folgenden Schritte:
a) Zerkleinern der Abfälle, Reststoffe, Verbundwerkstoffe oder Stoffverbünde oder Bereitstellen der Abfälle, Reststoffe, Verbundwerkstoffe oder Stoffverbünde in zerkleinerter Form,
b) Feinzerkleinern des Materials aus Schritt a) mit Hilfe einer Mühle zu einem Mahlgut,
c) Pulverisieren des in Schritt b) erhaltenen Mahlguts mit Hilfe eines Mahlverfahrens, bei dem die entstehenden Pulver-Partikel mechanochemisch aktiviert sind,
d) Auslaugen der in Schritt c) erhaltenen Pulver-Partikel mit Hilfe einer wässrigen, basischen Lösung,
e) Überführen der in der wässrigen, basischen Lösung enthaltenen Lanthanid-Hydroxyde in eine salzsaure oder phosphorsaure Lösung, und
f) Gewinnen der Lanthanid-Chloride aus der genannten salzsauren oder phosphorsauren Lösung.

Die Erfinder haben völlig überraschend feststellen können, dass die Anwendung einer Hochenergiekugelmühle zum Pulverisieren des Ausgangsmaterials zur Folge hat, dass zumindest ein Teil der Seltenerdmetall-Kationen in konzentrierter Lauge löslich wird. Dadurch wird es möglich, die Seltenerd-Kationen von solchen Kationen zu trennen, die sich nicht in Lauge lösen wie Silicium, Kupfer, Yttrium oder Scandium.
a) Das Verfahren beginnt mit einer Zerkleinerung der Abfälle, Reststoffe, Verbundwerkstoffe oder Stoffverbünde, sofern diese nicht bereits in einer entsprechenden Größe vorliegen, oder Bereitstellen der Abfälle, Reststoffe, Verbundwerkstoffe oder Stoffverbünde, die bereits entsprechend zerkleinert oder klein sind. Hierbei liegt die Korngröße vorzugsweise zwischen 2 und 500mm, stärker bevorzugt zwischen 20 und 50mm. Für das Zerkleinern wird bevorzugt ein Backenbrecher eingesetzt.
b) Es schließt sich eine Feinzerkleinerung des in Schritt a) erhaltenen Materials mit einer geeigneten Mühle an, beispielsweise einer Kugel- oder Stiftmühle, bei der die Teilchen auf eine Korngröße von bevorzugt 0,5 bis 1 mm zerkleinert werden.
c) Das in Schritt b) gewonnenen Mahlgut wird anschließend zu Pulver-Partikeln mit einer mittleren Korngröße von zwischen 10 und 250 µm, vorzugsweise von zwischen 30 und 120µm pulverisiert, wobei die dabei entstehenden Partikel in einer geeigneten Vorrichtung, beispielsweise in einer Hochenergiekugelmühle, mechanisch aktiviert (in anderer Bezeichnung mechanochemisch aktiviert) und ggf. funktionalisiert werden. Die mechanochemische Aktivierung ist im Artikel von Peter Baláž in "Mechanochemistry in Nanoscience and Minerals Engineering", erschienen im Jahre 2010 im Springer-Verlag, grundlegend anhand des historischen Erkenntnisgewinns beschrieben. Heute betrachtet man demnach die mechanische Aktivierung als Mehrschritt-Prozess mit Veränderungen der energetischen Parameter und der Menge an akkumulierter Energie für Feststoffe in jedem der umfassten vier Schritte, nämlich einer Akkumulierung von Defekten, einer Amorphisierung, der Bildung metastabiler polymorpher Formen und einer chemischen Reaktion. Dabei vergrößert der Primärprozess, umfassend den Anstieg der inneren und der Oberflächenenergie, den Anstieg der Oberfläche und die Verringerung der Kohärenz-Energie, allgemein die Reaktivität der Substanz. Sekundärprozesse wie Aggregation, Adsorption und Umkristallisation finden in aktivierten Systemen spontan statt und können während der entsprechenden Vermahlungen oder sogar noch danach auftreten.
   Die mechanische bzw. mechanochemische Aktivierung in einer Hochenergiekugelmühle tritt dann auf, wenn die Mahlgeschwindigkeit ausreichend hoch ist, um die Kugeln in der Mühle direkten Kollisionsereignissen zu unterwerfen, während sich Mahlgut zwischen den Kugeln befindet. Konkrete Geschwindigkeiten für den Mahlprozess, die für das Erreichen der mechanochemischen Aktivierung erforderlich sind, hängen von einer Vielzahl von Parametern ab. Das Mahlwerk einer solchen Hochenergiekugelmühle besteht in der Regel aus Zirkoniumoxid mit einer Härte von 8,5 auf der Moh-schen Skala; es ist davon auszugehen, dass die mechanochemische Aktivierung durch eine Kugelmühle aus derart hartem Material bei Geschwindigkeiten von etwa 400 min⁻¹ und höher, insbesondere von etwa 500 min⁻¹ und mehr, eintritt, wobei der Mahlgang je nach Menge des Mahlgutes in günstiger Weise mindestens 5 min, vorzugsweise mindestens 10 min und stärker bevorzugt mindestens 20 min lang dauern sollte.
d) Das in Schritt c) angefallene, mechanisch aktivierte Pulver wird einer basischen, insbesondere alkalischen Auslaugung unterzogen. Hierfür wird das Pulver mit einer geeigneten basischen, in der Regel wässrigen Lösung, vorzugsweise einer relativ hoch konzentrierten Natron- oder Kalilauge (z.B. einer 20-60%igen Natron- oder Kalilauge), aufgeschlossen, was vorteilhaft in einem Mischer mit einem Rührwerk stattfindet, in welchen das Pulver überführt und dort mit der Base vermischt wird. Die Menge an Lauge wird dabei so gewählt, dass ein möglichst großer Anteil der Lanthaniden in die entsprechenden Hydroxide überführt und auf diese Weise aus dem Pulver herausgelöst wird, wobei zu berücksichtigen ist, dass auch eine Vielzahl von Übergangsmetallionen in Form der entsprechenden Hydroxide in die Lösung übertritt, soweit vorhanden. SiO₂-haltiges Material sowie solche Metallionen, die keine wasserlöslichen Hydroxide oder Oxidhydrate bilden wie die Metallionen der Kupfergruppe und Scandium- und Yttriumionen, bleiben dagegen als bzw. im Feststoff zurück. Die Auslaugung erfolgt vorzugsweise bei erhöhten Temperaturen, insbesondere zwischen 80 und 160°C. Die Verweilzeit im Mischer oder dergleichen wird in Abhängigkeit vom Ausgangsmaterial in geeigneter Weise gewählt; sie liegt oft bei 10 Minuten bis 12 Stunden und kann z.B. bei schlackenartigen Materialien zwischen 30 und 240 Minuten, häufig zwischen 60 und 120 Minuten liegen. Die Menge an gelösten Verbindungen der Lanthanid-Metalle steigt dabei mit steigender Konzentration der Lauge, mit steigender Temperatur und mit steigender Verweildauer der Laugensuspension im Mischer.
e) Sofern ein Material aufgearbeitet werden soll, das weitere Ionen, insbesondere Übergangsmetallionen aufweist, die sich im unter d) definierten alkalischen Milieu lösen, werden anschließend Maßnahmen ergriffen, um diese störenden Begleitelemente abzutrennen. Hierfür wird/werden je nach dem Vorhandensein dieser Begleitelemente einer oder mehrere der nachfolgenden Trennschritte durchgeführt.
e1) Zur Abtrennung von gegebenenfalls vorhandenen Zirkonium- und/oder Titanium-Ionen aus der die Lanthanid-Hydroxide enthaltenden Lösung wird diese mit einer Säure, vorzugsweise einer zwei- bis sechs-molaren Säure, beispielsweise Salzsäure oder Phosphorsäure, versetzt ("geleacht"). Dabei werden viele Ionen wie beispielsweise die Ionen der Seltenen Erden in ihre löslichen Chloride und Phosphate überführt, während eine Reihe von Übergangsmetallionen, insbesondere solche der 4. und 5. Nebengruppe wie Zirkon, Metalloxide bilden, die als fester Niederschlag ausfallen und im Anschluss abfiltriert werden können.
e2) Zur gleichzeitigen Abtrennung von Ni²⁺-, Co²⁺-, Mn²⁺-, Zn²⁺-Ionen sowie allen Alkali- und Erdalkalimetallen kann folgender Verfahrensablauf genutzt werden. In einem ersten Teilschritt wird die Metallhydroxid-Lösung mit einer FeCl₂-Lösung (günstig ist die Verwendung einer etwa 10%igen wässrigen FeCl₂-Lösung, wobei in der Regel einige Tropfen (ca. 1 ml) auf 100 ml Metallhydroxid-Lösung ausreichen) und zusätzlich mit (NH₄)₂CO₃ bis zur bleibenden Trübung versetzt. Hierfür genügt für die genannte Ansatzgröße in der Regel eine Menge von einigen Tropfen (ca. 1 ml), sofern z.B. eine etwa 10%ige wässrige (NH₄)₂CO₃-Lösung verwendet wird. Diese wird vorzugsweise unter Schütteln zugesetzt. Dann wird so viel Salzsäure (günstig in einer Konzentration von 2,5N) hinzugegeben, bis diese Trübung verschwindet. Eine nochmalige Fällung mit (NH₄)₂CO₃ (z.B. mit einer 10%igen Lösung) wird durchgeführt, bis sich kein weiterer Niederschlag mehr bildet. Der Niederschlag kann je nach Zusammensetzung des Ausgangsmaterials z.B. die folgende Komponenten enthalten: Ti(OH)₄, In(OH)₃, Fe(OH)₃, Cr(OH)₃, Al(OH)₃, Be(OH)₂, FePO₄, FeVO₄, Zr(OH)₄, Ga(OH)₃ sowie die Hydroxide der Seltenen Erden mit den Ordnungszahlen 57-71, [SE](OH)₃. Die eingangs genannten, abzutrennenden Kationen finden sich dagegen in der Lösung. Der Niederschlag wird sodann von der Lösung separiert, beispielsweise abzentrifugiert, und ggf. gewaschen, beispielsweise mit heißem Wasser, worauf die Lösung verworfen wird. Der gewonnene Niederschlag wird in einer anorganischen Säure wie Salzsäure oder Phosphorsäure aufgenommen. Wenn er der nachfolgenden Abtrennung gemäß e3) unterworfen werden soll, wird hierfür vorteilhaft möglichst wenig Säure verwendet, z.B. 5N HCl.
e3) Zur zusätzlichen Abtrennung von Kationen wie In⁴⁺, Al³⁺, Be²⁺, V⁵⁺ und Cr⁶⁺ kann die saure Lösung aus e1) oder e2) mit einem mit der wässrigen Säurelösung unmischbaren organischen Lösungsmittel geschüttelt werden. Als organisches Lösungsmittel dient beispielsweise ein Ether wie Diethylether. Nach dem Schütteln ("ausäthern") enthält die organische bzw. ätherische Schicht FeCl₃ und ggf. GaCl₃, während die wässrige Lösung Fe³⁺, In³⁺, Al³⁺, Be²⁺, Cr³⁺ und [SE]³⁺, gegebenenfalls (sofern Schritt e1) nicht durchgeführt wurde) auch ZrO²⁺ und TiO²⁺ enthalten kann. Die Lösung wird in einer alkalischen, oxidativ wirkenden wässrigen Lösung neutralisiert, beispielsweise in einer Mischung von NaOH (z.B. 30%ig) und H₂O₂ (z.B. 3%ig). Im Niederschlag verbleiben ZrO₂ und TiO₂, sofern die entsprechenden Ionen noch vorhanden waren, [SE](OH)₃ und Spuren von Fe(OH)₃, während sich in der Lösung ggf. In(OH)₄⁻, Al(OH)₄⁻, Be(OH)₄⁻, VO₃⁻ und CrO₄⁻ befinden. Die letztgenannte Lösung wird verworfen. Der Niederschlag wird, ggf. nach Waschen, in HCl gelöst.
   Sofern Schritt e1) nicht durchgeführt wurde und sich im Niederschlag noch zu entfernendes ZrO₂ und/oder TiO₂ und/oder weiteres Fe(OH)₃ befand, kann ein weiterer Teilschritt e3-2) folgen. Hierfür wird die salz- oder phosphorsaure Lösung mit Na₂HPO₄ ausgefällt. Das Fällungsprodukt enthält ggf. Zr₃(PO₄)₄. In der Lösung verbleiben [SE]³⁺ und Fe²⁺. Die Lösung wird mit Ammoniak und H₂O₂ versetzt, wobei sich ein Niederschlag von [SE](OH)₃ mit Spuren von Fe(OH)₃ und Ti(OH)₄ bildet. Der Niederschlag wird mit NH₄NO₃-Lösung (z.B. 1M wässriger Lösung) gewaschen und in möglichst wenig HCl (z.B. 5N) gelöst. Zur Separierung der Lanthanid-Ionen von den Fe- und Ti-Spuren wird die Lösung dann bei Bedarf im sauren Bereich (pH-Wert bei ca. 0,5) mit Oxalsäure oder einem Oxalat behandelt, wobei die Lanthanid-Ionen als Oxalate ausfallen. Diese werden gewaschen und gegebenenfalls der nachfolgenden Trennung gemäß (f) unterworfen.
f) Trennung der verschiedenen seltenen Erden voneinander.
f1) Die salzsaure oder phosphorsaure Lösung, die in allen Schritten e1) bis e3) anfällt, kann verschiedene Lanthanide, neben Lanthan beispielsweise Cer und/oder Neodym, enthalten, die beim "Leaching" mit Salzsäure Metallchloride bilden. Dies führt zum einem Metallchloridgemisch, in dem unterschiedliche Metalle mit sehr ähnlichen chemischen und physikalischen Eigenschaften nebeneinander vorliegen. Zur Abtrennung von Cer kann in einem ersten Trennungsschritt diese salzsaure Lösung mit Oxalsäure oder einem Oxalat gefällt werden (günstig bei einem pH-Wert von etwa 0,5), wobei gleichzeitig alle Seltenen Erden als Oxalate ausfallen. Auch aus einer phosphorsauren Lösung können sie mit Oxalsäure oder einem Oxalat gefällt werden. Wurde Schritt e3-2) durchgeführt, liegen die Lanthanid-Ionen bereits als gefällte Oxalate vor. Der Oxalat-Niederschlag wird mit NaOH behandelt, wobei sich Natriumoxalat bildet, das wiederum ausfällt. Der Oxalat-Niederschlag kann anschließend getrocknet und unter Sauerstoffatmosphäre zu einem oxidischen Pulver geglüht werden. Aus diesem Pulver wird durch Zugabe von Natronlauge ein Mischhydroxid erzeugt. Dieses wird anschließend mit Salpetersäure (z.B. in einer Konzentration von 2M) behandelt, wobei reines CeO₂ ausfällt, während die übrigen Lanthanide in Lösung verbleiben.
f2) Unabhängig davon, ob Cer gemäß Schritt f1) abgetrennt wurde oder nicht, werden dann, wenn sich mehr als eine Ionenart der Lanthaniden in der Lösung des letzten durchgeführten Schritts der Gruppe e1) bis e3) bzw. in der Oxalatfällung des Schritts e3-2) befindet, diese verschiedenen Lanthanide vorzugsweise nachfolgend durch eine Flüssig-Flüssig-Extraktion voneinander getrennt. Sofern das Ausgangsmaterial hierfür in Form einer [SE]-Chlorid- oder Nitratlösung angefallen ist, wird diese auf eine geeignete Konzentration eingestellt, beispielsweise von 0,01-0,5 mol/dm³. Die Oxalat-Fällung wird mit NaOH-Lösung behandelt, wobei Natriumoxalat ausfällt, worauf der Überstand, der die [SE]³⁺-Ionen enthält, mit Salz- oder Salpetersäure behandelt wird, bis eine vergleichbare Konzentration erreicht ist. Sodann wird die Lösung mit einer in einem unpolaren Lösungsmittel wie Kerosin gelösten Verbindung extrahiert, die gegenüber Lanthaniden-Kationen als vorzugsweise mehrzähniger Komplexierungs-Ligand und Protonen-Donator fungiert. Während der Extraktion gibt diese Verbindung Protonen in die wässrige Phase ab und komplexiert im Anschluss die vorhandenen Lanthaniden-Kationen ("flüssiger Kationen-Austauscher"). Zur Protonenabgabe muss das Extraktionsmittel eine vorzugsweise organische Protonensäure sein. Im Allgemeinen werden dabei mono- oder dialkylierte Derivate der Phosphor- bzw. Schwefelsäure eingesetzt. Für die vorliegende Erfindung besonders geeignet sind Chemikalien aus der Gruppe der Organophosphorsäuren, insbesondere Dialkylphosphorsäuren wie beispielweise HDEHP [Di-2-ethyl-hexyl-phosphorsäure] oder D2EHPA [Di-(2-ethyl-hexyl)phosphorsäure]. Auch z.B. Tri-n-butylphosphat (TBP) oder Tri-isobutylphosphat (TIBP) kann hierfür eingesetzt werden, wobei die Diphosphorsäuren gegenüber den Monophosphorsäuren bevorzugt sind. In der nachfolgenden Reaktionsgleichung kann das Anion A⁻ dementsprechend Chlorid oder Nitrat sein, während der Ligand bzw. das Komplexierungsmittel L durch die Organophoshorsäure gebildet wird, die, sofern es sich bei ihr um einen Chelatliganden mit zwei "Zähnen" handelt, über die Anbindung eines Phosphatrestes (der ebenfalls als A⁻ anzusehen ist), jeweils eines der Anionen verdrängen kann (was aus Entropiegründen begünstigt ist): 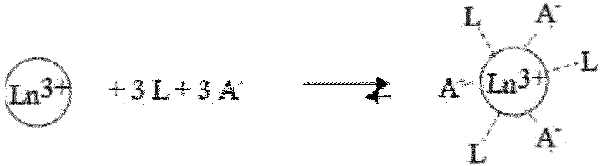 mit:
   - Ln³⁺: = Lanthanoiden-Ionen
   - A⁻: = Anion
   - L: = Ligand (Komplexierungsmittel)

   Die Konzentration im unpolaren organischen Lösungsmittel wird in geeigneter Weise gewählt, beispielsweise kann sie bei 0,1 bis 1 mol/dm³, vorzugsweise bei etwa 0,2 mol/dm³ liegen. Dies geschieht in einer Anlage, die ein Mischen und Trennen einer Flüssigkeit von einer anderen gestattet und ein Entweichen von Lösungsmittel ausschließt. Bei dem Extraktionsvorgang gehen die verbliebenen Seltenerdverbindungen eine Komplexverbindung mit der Organophosphorsäure ein, die aufgrund geringerer Dichte über der Restflüssigkeit schwimmt und sich somit abtrennen lässt. Auf diese Weise erhält man eine Fraktion, die ausschließlich Kationen aus der Gruppe der Lanthaniden, mit Ausnahme von Cer, enthält. Die Trennung der Komplexverbindung(en) vom unpolaren Lösungsmittel erfolgt auf gängige Weise, vorzugsweise durch einen sogenannten "Stripping-Prozess", in dem die Trennung durch den Einsatz von Salzsäure erreicht wird. Hierfür kann die mit der/den Komplexverbindung(en) beladene organische Phase mit 1,5%iger HCl ausgefällt werden. Dieser Schritt kann in einer geeigneten Vorrichtung durchgeführt werden, die der Fachmann kennt. Eine Möglichkeit hierfür ist die Verwendung eines Mixer-Settlers. Aufgrund der geringen Dichteunterschiede der zu trennenden Stoffe wird der Prozess der Extraktion vorzugsweise jedoch in einem Zentrifugalextraktor durchgeführt. In Anbetracht der chemisch und physikalisch sehr ähnlichen Eigenschaften der Metallchloride untereinander ist die Extraktion mit nachfolgender Reinigung unter Umständen einmal oder öfter zu wiederholen, bis die gewünschte Reinheit an Seltenerdchlorid [SE]Cl₃ gegeben ist. Das abgetrennte Lösungsmittel lässt sich über eine Kreislaufführung wieder in den Produktionsprozess zurückführen und somit wiederverwenden.
   Im Zentrifugalextraktor läuft die Extraktion wie folgt ab: Die zu extrahierende Phase (schwere Phase), die anfangs ein oder mehrere Solvate enthält, und das Lösungsmittel (leichte Phase), das mit der zu extrahierenden Phase nicht mischbar sein darf und eine andere Dichte haben muss, fließen im Gegenstrom in den Extraktorrotor, in welchem aufgeschichtete, mechanische Teile eine bestimmte Stufenanzahl bilden. Die in jeder Stufe aufeinanderfolgenden Misch- und Trennvorgänge ermöglichen die Lösung der Solvate im organischen Lösungsmittel. Jede Stufe besteht aus folgenden Teilen: Einer Mischkammer, in welcher die beiden Phasen durchgemischt werden und die Übertragung der zu extrahierenden Solvate stattfindet. Eine feststehende Scheibe ermöglicht das Mischen der beiden Phasen und die Bildung einer feinen Emulsion. Sie wirkt wie eine Pumpe, welche die beiden Phasen aus den Vorstufen ansaugt. In einer Dekantierkammer werden die beiden zuvor gemischten Flüssigkeiten durch Zentrifugalkraft getrennt. Zwei Wehre stabilisieren die Abscheidezone unabhängig von den jeweiligen Flüssigkeitsmengen. Die Stellung der Phasengrenzfläche hängt vom Wehrdurchmesser der schweren Phase ab. Das Wehr ist auswechselbar und wird dem Dichteverhältnis der beiden Phasen angepasst. Der Zulauf der beiden Phasen erfolgt durch zwei am oberen Teil des Gehäuses angebrachten Stutzen. Die Ableitung der Phasen erfolgt entweder durch Schwerkraft oder mittels Zentripetalturbinen. Die Seltenerdelemente werden durch das organische Lösungsmittel separiert und in die organische Phase überführt. Der anschließende Vorgang (Strippen) entfernt die Seltenen Erden aus der organischen Phase und bringt sie in angereicherter und reinerer Form in eine wässrige Phase zurück. Dies geschieht mit sehr starker Säure, wie beispielsweise Salzsäure, bei einem pH-Wert zwischen 0 und 1. Für die Trennung der Seltenerdchloride untereinander ist die Prozedur so oft zu wiederholen, bis die einzelnen Elemente nacheinander abgetrennt wurden. Beim Strippvorgang ist der pH-Wert von 1 mit jeder Wiederholung schrittweise abzusenken, so dass die einzelnen Seltenen Erden selektiv in der wässrigen Phase als Chlorid angereichert werden können. Beispielsweise wird für Neodym die Prozedur bei pH = 0,5 durchgeführt, während für Lanthan ein pH-Wert = 0,2 einzustellen ist.
g) ggf. Umwandlung des oder der einzelnen, nun getrennten, aufgereinigten Lanthanid-Chloride in das oder die hochreinen Seltenerdoxide [SE]₂O₃, beispielsweise durch Calcinieren des oder der Chloride bei Temperaturen von mindestens 1000°C in einem Ofen oder durch eine abschließende Glühung unter Sauerstoffatmosphäre bei 800 bis 1.000°C. Hierbei werden die Chloride in die entsprechenden, hochreinen Metalloxide überführt, die z.B. in der optischen sowie der Halbleiterindustrie als Rohstoff Verwendung finden können; alternativ können die Chloride auch elektrochemisch zu den entsprechenden elementaren Metallen reduziert werden.

### Ausführungsbeispiele

### Beispiel 1

Das Ausgangsmaterial besteht in diesem Beispiel aus Schlackenmaterial aus dem Recycling von Nickel-Metallhydrid-Batterien, deren negative Elektrode aus einer Legierung von Nickel mit Seltenen Erden bestand. Bei diesem Recycling wird ein Großteil des Nickel-Anteils aus der Legierung entfernt, so dass der Anteil an Lanthanid relativ groß ist.
1. Das Material wird in einem Backenbrecher auf eine Größe von 30 mm zerkleinert.
2. Das vorzerkleinerte Material wird in einer Kugelmühle auf eine Größe von 5 mm zerkleinert.
3. Anschließend wird das Material in einer Hochenergiekugelmühle 90 Minuten lang auf eine Größe von rund 70µm feinzerkleinert.
4. Das funktionalisierte mineralische Pulver wird für 60 Minuten in einem Mischer mit Rührwerk in 100 ml 30%iger Natronlauge in einem Mischverhältnis flüssig zu fest = 2:1 bei 140°C ausgelaugt.
5. Das ausgelaugte Material in Form von Metallhydroxiden wird zur weiteren Abtrennung störender Begleitelemente mit einigen Tropfen 10%iger FeCl₂-Lösung und zusätzlich unter Schütteln tropfenweise mit konzentrierter (NH₄)₂CO₃ bis zur verbliebenden Trübung versetzt. Danach wird so viel 2,5N Salzsäure hinzugegeben, bis diese Trübung verschwindet und zur Lösung so viel 10%ige (NH₄)₂CO₃ hinzugegeben, bis sich kein weiterer Niederschlag mehr bildet. Der Niederschlag enthält nachfolgende Komponenten: Fe(OH)₃, Cr(OH)₃, Alkali- und Erdalkalimetalle sowie die Seltenerdhydroxide (insbesondere La(OH)₃) sowie Ca(OH)₂. In der Lösung verbleiben Ni²⁺, Co²⁺, Mn²⁺, Zn²⁺.
   Der Niederschlag wird abzentrifugiert, mit heißem Wasser gewaschen und in möglichst wenig 5N HCl gelöst und ausgeäthert. Die ätherische Schicht enthält FeCl₃, während die wässrige Lösung neben Spuren von Fe³⁺, Cr³⁺ die Seltenen Erden enthält. Die Lösung wird in einer Mischung von 30%igen NaOH und 3%igen H₂O₂ neutralisiert. Im Niederschlag verbleiben die Seltenen Erden und Spuren von Fe(OH)₃, während sich in der Lösung CrO₄⁻ befindet. Der Niederschlag wird mit 1M NH₄NO₃-Lösung gewaschen und in möglichst wenig 5N HCl gelöst. Die Seltenen Erden werden anschließend mit Oxalsäure aus der salzsauren Lösung bei pH=0,5 als Oxalate gefällt.
6. Die Oxalate werden mit NaOH-Lösung behandelt, wodurch sich Natriumoxalat bildet und ausfällt. Die überstehende Lösung wird mit HNO₃ behandelt, wodurch das in der Seltenerdfraktion enthaltene Cer in Form von CeO₂ abgetrennt wird. In der Lösung verbleiben die restlichen Seltenen Erden, vorwiegend Lanthan und Neodym. Die [SE]-Nitratlösung wird auf eine Konzentration von 0,1mol/dm³ eingestellt und mit 0,2M Organophosphorsäure HDEHP [Di-2-ethyl-hexyl-phosphorsäure in Kerosin] extrahiert, wobei die Metallionen von der wässrigen in die organische Phase überführt werden. Anschließend wird die beladene organische Phase mit 1,5%iger HCl ausgefällt und von Verunreinigungen und dem vorhandenen Neodym gereinigt. Diese Prozedur wird in einem Mixer-Settler, vorteilhaft jedoch in einem Zentrifugalextraktor durchgeführt. Sie wird ggf. mehrere Male wiederholt, bis die gewünschte Reinheit an Lanthanchlorid LaCl₃ vorliegt.
7. Das aufgereinigte Lanthanchlorid wird bei Temperaturen von 1000°C unter Sauerstoffzufuhr in einem Ofen calciniert und so in hochreines Lanthanoxid La₂O₃ überführt.

Beispiel 2 mit Vergleichsbeispiel: Extraktionsversuche an Lanthanflintgläsern.

Ein Flintglas mit einem Anteil von 45 Mol-% La₂O₃ wurde mit einem Backenbrecher und einer Kugelmühle zerkleinert wie im Beispiel 1 unter den Punkten 1. und 2. beschrieben. Das zerkleinerte Material wurde sodann in vier Chargen aufgeteilt. Die erste Charge wurde ohne weiteres Mahlen wie nachstehend beschrieben (Probe des Vergleichsbeispiels ohne Hochenergie-Mahlschritt) weiterbehandelt, während die 2. Charge in drei verschiedene Proben aufgeteilt wurde (Beispiele 2.1 bis 2.3), die in einer Hochenergiekugelmühle jeweils 30 min (Beispiel 2.1) bzw. 90 min lang (Beispiele 2.2 und 2.3) feinzerkleinert wurden. Anschließend wurde von allen vier Proben jeweils genau 1,00 g abgewogen, in 150 ml 30%iger NaOH versetzt und intensiv vermischt (z.B. in einem Mischer mit Rührwerk). Für die Beispiele 2.1 und 2.2 wurde Natronlauge von Raumtemperatur verwendet, für das Beispiel 2.3 Natronlauge mit einer Temperatur von 90°C. Nach jeweils 5 min, 10 min, 30 min, 60 min, 2h, 5,5 h und 24 h wurden mit einer Spritze Proben der wässrigen Phase entnommen und mit einem Spritzenfilter filtriert, mit destilliertem Wasser im Verhältnis 1:10 verdünnt und mithilfe optischer Emissionsspektroskopie (OES) nach dem Inductive Coupled Plasma-Verfahren (ICP) auf den Gehalt der vorhandenen Ionen wie Lanthan, Zirkonium, Gadolinium und Titan untersucht. Folgende Ergebnisse wurden erhalten:

| Vergleichsbeispiel | 5min | 10min | 30min | 60min | 2h | 5,5h | 24h |
|---|---|---|---|---|---|---|---|
| | [mg/g] | [mg/g] | [mg/g] | [mg/g] | [mg/g] | [mg/g] | [mg/g] |
| La | 8,422 | 11,384 | 19,708 | 29,238 | 28,501 | 29,158 | 30,265 |
| Zn | 21,628 | 21,463 | 21,891 | 23,523 | 22,835 | 23,147 | 23,964 |
| Gd | 9,546 | 10,101 | 12,157 | 15,883 | 18,109 | 19,457 | 21,256 |
| Ti | 3,275 | 3,237 | 3,370 | 3,581 | 3,498 | 3,589 | 3,845 |

| Beispiel 2.1 | 5 min | 10 min | 30 min | 1 h | 2 h | 5,5 h | 24 h |
|---|---|---|---|---|---|---|---|
| | [mg/g] | [mg/g] | [mg/g] | [mg/g] | [mg/g] | [mg/g] | [mg/g] |
| La | 19,706 | 23,448 | 24,859 | 36,947 | 42,801 | 47,796 | 57,923 |
| Zn | 32,130 | 40,316 | 46,596 | 52,554 | 60,457 | 66,868 | 66,757 |
| Gd | 15,532 | 19,476 | 22,380 | 25,399 | 28,659 | 30,752 | 32,680 |
| Ti | 4,343 | 4,454 | 5,474 | 5,505 | 6,442 | 6,498 | 6,520 |

| Beispiel 2.2 | 5 min | 10 min | 30 min | 1 h | 2 h | 5,5 h | 24 h |
|---|---|---|---|---|---|---|---|
| | [mg/g] | [mg/g] | [mg/g] | [mg/g] | [mg/g] | [mg/g] | [mg/g] |
| La | 20,302 | 24,626 | 29,065 | 41,036 | 45,093 | 57,832 | 63,512 |
| Zn | 44,060 | 68,025 | 74,027 | 85,031 | 92,132 | 98,641 | 98,332 |
| Gd | 17,931 | 19,886 | 25,756 | 27,222 | 31,616 | 35,465 | 37,797 |
| Ti | 6,162 | 6,249 | 7,053 | 7,412 | 8,324 | 8,823 | 8,864 |

| Beispiel 2.3 | 5 min | 10 min | 30 min | 1 h | 2 h | 5,5 h | 24 h |
|---|---|---|---|---|---|---|---|
| | [mg/g] | [mg/g] | [mg/g] | [mg/g] | [mg/g] | [mg/g] | [mg/g] |
| La | 24,964 | 30,460 | 34,386 | 48,034 | 53,265 | 58,671 | 75,351 |
| Zn | 48,614 | 73,432 | 77,019 | 89,671 | 94,284 | 101,462 | 105,499 |
| Gd | 20,547 | 23,364 | 25,143 | 29,348 | 35,366 | 39,553 | 42,375 |
| Ti | 7,310 | 7,463 | 8,599 | 8,734 | 9,341 | 9,583 | 10,014 |

Das erfindungsgemäße Verfahren weist gegenüber dem Stand der Technik folgende Vorteile auf.
1. Während bei den bekannten Wiederaufarbeitungsverfahren nur solche Lanthaniden rückgewonnen werden können, die im abzutrennenden Wertstoff elementar vorliegen und eine eigene Phase neben dem mineralischen Grundgitter bilden, kann das erfindungsgemäße Verfahren auf eine breite Palette mineralischer Abfälle und Reststoffe angewendet werden, in denen die zu trennenden Stoffe homogen über den Werkstoff verteilt und in silikatischen oder anderen mineralischen Phasen gebunden sind.
2. Im Vergleich zur Erstgewinnung von Lanthan oder anderen Seltenerdmetallen aus Phosphat-Mineralien (Monazit) eignet sich das vorliegende Verfahren auch und insbesondere für silikatische Materialien wie Gläser, Glaskeramiken und kristalline Silikat-Materialien und -Mineralien.
3. Der Einsatz einer Vorrichtung wie einer Hochenergiekugelmühle, die den Energiegehalt der Oberfläche der Partikel erhöht und deren chemische Reaktivität steigert, führt dazu, dass die einzusetzenden Lösungsmittel wie Säuren und Laugen in niedrigeren Konzentrationen eingesetzt werden können, ohne dass sich ein negativer Einfluss auf das Trennergebnis ergibt. Darüber hinaus lässt sich damit auch der Einsatz hochkonzentrierter Flusssäure vermeiden, was dem Verfahren eine besondere Stellung hinsichtlich der Umweltfreundlichkeit und der Arbeitssicherheit verleiht.
4. Das Verfahren ist in seinem Grundsatz auf viele Arten mineralischer Abfälle und Reststoffe anwendbar, wie beispielsweise auf Schlacken, Gläser und Aschen. Dadurch ist ein flexibler und wirtschaftlicher Einsatz der im Verfahren verwendeten Ausrüstung gegeben.
5. Durch den Einsatz von Mühlen, die die aufzubereitenden Stoffe zu Pulvern zerkleinern, ist es außerdem möglich, Verbundwerkstoffe sowie Stoffverbünde aufzutrennen und somit hinsichtlich der Rückgewinnung von Wertstoffen bedeutsame Bauelemente freizulegen und gegenüber den nachfolgend eingesetzten Lösungsmitteln zu funktionalisieren. Dieser Tatbestand führt dazu, dass auch Abfälle aus dem Bereich der Elektronik, wie beispielsweise LED's und Leiterplatten, mit dem erfindungsgemäßen Verfahren prozessiert werden können.
6. Die abschließende Separation von Lanthan und anderen Lanthaniden aus der Chloridlösung lässt sich erfolgreich in einem meist dreistufigen Verfahren mit "Flüssig-Flüssig Extraktion" in einem Zentrifugalextraktor unter Zugabe eines organischen Lösungsmittels wie D2EHPA (Di-(2-ethylhexyl)phosphorsäure) durchführen. Solche Auftrennungen sind ansonsten schwierig.
7. Die oder jede der separierten Lanthaniden-Verbindung kann in einem entsprechend erhitzten Ofen unter Sauerstoffzufuhr zum entsprechenden, sehr reinen Oxid verglüht werden.

## Patentansprüche

1. Verfahren zum Rückgewinnen von Lanthaniden aus mineralischen Abfällen, aus Reststoffen, aus Verbundwerkstoffen oder aus Stoffverbünden, die eine oder mehrere anorganische Komponente(n) aufweisen, umfassend die folgenden Schritte:
a) Zerkleinern der Abfälle, Reststoffe, Verbundwerkstoffe oder Stoffverbünde oder Bereitstellen der Abfälle, Reststoffe, Verbundwerkstoffe oder Stoffverbünde in zerkleinerter Form,
b) Feinzerkleinern des Materials aus Schritt a) mit Hilfe einer Mühle zu einem Mahlgut,
c) Pulverisieren des in Schritt b) erhaltenen Mahlguts mit Hilfe eines Mahlverfahrens, bei dem die entstehenden Pulver-Partikel mechanochemisch aktiviert sind,
d) Auslaugen der in Schritt c) erhaltenen Pulver-Partikel mit Hilfe einer wässrigen, basischen Lösung,
e) Überführen der in der wässrigen, basischen Lösung enthaltenen Lanthanid-Hydroxyde in eine salzsaure oder phosphorsaure Lösung, und
f) Gewinnen von Lanthanid-Chloriden aus der genannten salzsauren oder phosphorsauren Lösung.

2. Verfahren nach Anspruch 1, **dadurch gekennzeichnet, dass** Schritt c) mittels einer Hochenergiekugelmühle durchgeführt wird.

3. Verfahren nach Anspruch 1 oder 2, **dadurch gekennzeichnet, dass** die wässrige, basische Lösung gemäß Schritt d) 20 bis 60%ige Natronlauge ist.

4. Verfahren nach einem der Ansprüche 1 bis 3, **dadurch gekennzeichnet, dass** es sich bei der salzsauren oder phosphorsauren Lösung, die in Schritt e) eingesetzt wird, um 2- bis 6-molare Salzsäure oder Phosphorsäure handelt.

5. Verfahren nach einem der voranstehenden Ansprüche, **dadurch gekennzeichnet, dass** die Gewinnung der Lanthanid-Chloride nach Schritt f) mittels einer Flüssig-Flüssig-Extraktion erfolgt, bei der unterschiedliche Lanthanid-Chloride voneinander getrennt werden.

6. Verfahren nach Anspruch 5, **dadurch gekennzeichnet, dass** die Extraktion unter Verwendung eines organischen Lösungsmittels, vorzugsweise unter Verwendung von Di-(2-ethyl-hexyl)phosphorsäure, durchgeführt wird.

7. Verfahren nach Anspruch 5 oder 6, **dadurch gekennzeichnet, dass** die Extraktion in einem Zentrifugalextraktor durchgeführt wird.

8. Verfahren nach einem der voranstehenden Ansprüche, **dadurch gekennzeichnet, dass** die in Schritt f) gewonnenen, ggf. separierten Lanthanid-Chloride in die jeweiligen Oxide überführt werden, indem sie in einer sauerstoffhaltigen Atmosphäre erhitzt, vorzugsweise mit einer Temperatur von zwischen 800 und 1000°C behandelt werden.

9. Verfahren nach einem der voranstehenden Ansprüche, worin die gemäß Schritt e) entstandene salzsaure oder phosphorsaure Lösung einen Niederschlag von Metalloxiden der 4. und/oder 5. Gruppe der Übergangsmetalle enthält, der von der Lösung abgetrennt wird.

10. Verfahren nach einem der voranstehenden Ansprüche, indem Schritt e) wir folgt durchgeführt wird:
- in einem ersten Teilschritt wird der in Schritt d) erhaltenen wässrigen basischen Lösung FeCl₂ und sodann (NH₄)₂CO₃ in einer Menge zugesetzt, bis eine Trübung entsteht, worauf so viel Salzsäure hinzugegeben wird, bis die Trübung wieder verschwindet, und anschließend soviel (NH₄)₂CO₃ zugesetzt wird, bis ein entstehender Niederschlag vollständig ist,
- der Niederschlag wird von der Lösung separiert, bei Bedarf gewaschen und in Salzsäure oder Phosphorsäure aufgenommen.

11. Verfahren nach Anspruch 9 oder 10, **dadurch gekennzeichnet, dass** die gemäß Schritt e) entstandene salzsaure oder phosphorsaure Lösung mit einem organischen Lösungsmittel, insbesondere einem Ether, extrahiert wird, worauf sie in einer alkalischen, oxidativ wirkenden wässrigen Lösung neutralisiert und der dabei entstehende Niederschlag gewonnen und anschließend in Salzsäure oder Phosphorsäure aufgelöst wird.

12. Verfahren nach Anspruch 11, worin der in Salzsäure oder Phosphorsäure gelöste Niederschlag mit Na₂HPO₄ behandelt und das Fällungsprodukt abgetrennt wird, worauf die verbleibende Lösung mit Ammoniak und einem Oxidationsmittel, vorzugsweise H₂O₂, versetzt wird, wobei die vorhandenen Lanthanid-Ionen als Hydroxide ausfallen, die abgetrennt und sodann in Salzsäure gelöst werden.

13. Verfahren nach einem der voranstehenden Ansprüche, worin die gemäß Schritt e) entstandene salzsaure oder phosphorsaure Lösung
f-1) mit Oxalsäure oder einem Oxalat umgesetzt wird derart, dass die Lanthanid-Ionen als Oxalate ausfallen, worauf der Oxalat-Niederschlag mit NaOH in einer Menge behandelt wird, die die Ausfällung von Natriumoxalat bewirkt, während die Lanthanid-Ionen in Lösung gehen, worauf der Niederschlag von der Lösung getrennt und die Lösung mit Salpetersäure behandelt wird, wobei CeO₂ ausfällt, während gegebenenfalls weitere Lanthanid-Ionen in Lösung verbleiben.

14. Verfahren nach einem der voranstehenden Ansprüche, worin die gemäß Schritt e) oder
f-1) entstandene salzsaure oder salpetersaure Lösung
f-2) einer Flüssig-Flüssig-Extraktion mit einer in einem unpolaren Lösungsmittel gelösten organischen Schwefel- oder Phosphorsäure unterworfen wird, wobei die Lanthanid-Ionen in Form von Komplexverbindungen in die organische Phase übertreten, worauf diese mit Hilfe von Salzsäure in Form ihrer Chloride ausgefällt werden.

15. Verfahren nach Anspruch 14, worin die Extraktion mit Hilfe eines Zentrifugal-Extraktors durchgeführt wird.

## Claims

1. A process for recovering lanthanides from mineral wastes, residuals, composite materials or composites comprising one or more inorganic components, comprising the following steps:
a) crushing the waste, residuals, composite materials or composites or providing the waste, residuals, composite materials or composites in crushed form,
b) comminuting the material from step a) by means of a mill to a millbase,
c) pulverizing the millbase obtained in step b) using a grinding process in which the resulting powder particles are mechanochemically activated,
d) leaching the powder particles obtained in step c) using an aqueous basic solution,
e) transferring the lanthanide hydroxides contained in the aqueous basic solution into a hydrochloric or phosphoric acid solution, and
f) recovering lanthanide chlorides from said hydrochloric or phosphoric acid solution.

2. The method according to claim 1, **characterized in that** step c) is carried out using a high energy ball mill.

3. The method according to claim 1 or 2, **characterized in that** the aqueous basic solution according to step d) is 20 to 60% sodium hydroxide solution.

4. The method according to any one of claims 1 to 3, **characterized in that** the hydrochloric acid or phosphoric acid solution used in step e) is 2 to 6 molar hydrochloric acid or phosphoric acid.

5. The method according to any one of the preceding claims, **characterized in that** the extraction of the lanthanide chlorides after step f) is carried out using a liquid-liquid extraction, in which different lanthanide chlorides are separated from each other.

6. The method according to claim 5, **characterized in that** the extraction is carried out using an organic solvent, preferably using di-(2-ethyl-hexyl) phosphoric acid.

7. The method according to claim 5 or 6, **characterized in that** the extraction is carried out in a centrifugal extractor.

8. The method according to any one of the preceding claims, **characterized in that** the optionally separated lanthanide chlorides obtained in step f) are converted into the respective oxides by heating in an oxygen-containing atmosphere, preferably at a temperature of between 800 and 1000°C.

9. The process according to any one of the preceding claims, wherein the hydrochloric acid or phosphoric acid solution formed in step e) comprises a precipitate of metal oxides of the 4th and/or 5th Group of transition metals, which is separated from the solution.

10. The process according to any one of the preceding claims, in which step e) is carried out as follows:
- in a first substep, the aqueous basic solution obtained in step d) is added with FeCl₂ and then with (NH₄)₂CO₃ in an amount until turbidity occurs, then hydrochloric acid is added until the turbidity disappears, and then (NH₄)₂CO₃ is added in an amount sufficient to complete a precipitate formed,
- the precipitate is separated from the solution, washed if necessary and taken up in hydrochloric acid or phosphoric acid.

11. The method according to claim 9 or 10, **characterized in that** the hydrochloric acid or phosphoric acid solution resulting according to step e) is extracted with an organic solvent, in particular an ether, then it is neutralized in an alkaline, oxidatively active aqueous solution, and the resulting precipitate is recovered and then dissolved in hydrochloric acid or phosphoric acid.

12. The process according to claim 11, wherein the precipitate dissolved in hydrochloric acid or phosphoric acid is treated with Na₂HPO₄ and the precipitate is separated, then the remaining solution is treated with ammonia and an oxidizing agent, preferably H₂O₂, to precipitate the lanthanide ions as hydroxides, which are separated and then dissolved in hydrochloric acid.

13. The process according to any one of the preceding claims wherein the hydrochloric or phosphoric acid solution formed in step e)
(f-1) is reacted with oxalic acid or an oxalate such that the lanthanide ions precipitate as oxalates, then the oxalate precipitate is treated with NaOH in an amount causing the precipitation of sodium oxalate, while the lanthanide ions go into solution, then the precipitate is separated from the solution and the solution is treated with nitric acid to precipitate CeO₂, while optionally further lanthanide ions remain in solution.

14. The process according to any one of the preceding claims wherein the hydrochloric or nitric acid solution formed in step e) or f-1)
(f-2) is subjected to liquid-liquid extraction with an organic sulfuric or phosphoric acid dissolved in a nonpolar solvent, whereby the lanthanide ions pass into the organic phase in the form of complex compounds, which are then precipitated in the form of their chlorides using hydrochloric acid.

15. The process according to claim 14, wherein the extraction is carried out by means of a centrifugal extractor.

## Revendications

1. Procédé de récupération de lanthanides à partir de déchets minéraux, à partir de résidus, à partir de matériaux composites ou à partir de composites de matériaux, qui présentent un ou plusieurs composant(s) inorganiques, comprenant les étapes suivantes:
a) concasser les déchets, résidus, matériaux composites ou composites de matériaux ou préparer les déchets, résidus, matériaux composites ou composites de matériaux sous forme concassée,
b) broyer finement la matière de l'étape a) à l'aide d'un broyeur en une matière broyée,
c) pulvériser la matière broyée obtenue à l'étape b) à l'aide d'un procédé de mouture, dans lequel les particules de poudre produites sont mécano-chimiquement activées,
d) laver les particules de poudre obtenues à l'étape c) à l'aide d'une solution aqueuse basique,
e) transférer les hydroxydes de lanthanides obtenus dans la solution aqueuse basique dans une solution d'acide chlorhydrique ou d'acide phosphorique, et
f) récupérer des chlorures de lanthanides à partir de ladite solution d'acide chlorhydrique ou d'acide phosphorique.

2. Procédé selon la revendication 1, **caractérisé en ce que** l'on exécute l'étape c) au moyen d'un broyeur à billes à haute énergie.

3. Procédé selon la revendication 1 ou 2, **caractérisé en ce que** la solution aqueuse basique selon l'étape d) est une solution de soude caustique à 20 à 60 %.

4. Procédé selon l'une quelconque des revendications 1 à 3, **caractérisé en ce que** la solution d'acide chlorhydrique ou d'acide phosphorique, que l'on utilise dans l'étape e), est une solution 2 à 6 molaire d'acide chlorhydrique ou d'acide phosphorique.

5. Procédé selon l'une quelconque des revendications précédentes, **caractérisé en ce que** l'on effectue la récupération des chlorures de lanthanides selon l'étape f) au moyen d'une extraction liquide-liquide, lors de laquelle on sépare l'un de l'autre différents chlorures de lanthanides.

6. Procédé selon la revendication 5, **caractérisé en ce que** l'on effectue l'extraction avec utilisation d'un solvant organique, de préférence avec utilisation d'acide di-(2-éthyl-hexyl)phosphorique.

7. Procédé selon la revendication 5 ou 6, **caractérisé en ce que** l'on effectue l'extraction dans un extracteur centrifuge.

8. Procédé selon l'une quelconque des revendications précédentes, **caractérisé en ce que** l'on transforme les chlorures de lanthanides récupérés, éventuellement séparés, à l'étape f) en oxydes respectifs, par le fait qu'on les chauffe dans une atmosphère contenant de l'oxygène, de préférence qu'on les traite à une température comprise entre 800°C et 1000°C.

9. Procédé selon l'une quelconque des revendications précédentes, dans lequel la solution d'acide chlorhydrique ou d'acide phosphorique formée selon l'étape e) contient un précipité d'oxydes de métaux du 4^{ème} et/ou du 5^{ème} groupe des métaux de transition, que l'on sépare de la solution.

10. Procédé selon l'une quelconque des revendications précédentes, dans lequel on exécute l'étape e) comme suit:
- dans une première étape partielle, on ajoute à la solution aqueuse basique obtenue à l'étape d) du FeCl₂ et ensuite du (NH₄)₂CO₃ en une quantité provoquant l'apparition d'un trouble, puis on ajoute de l'acide chlorhydrique en une quantité telle que le trouble disparaisse de nouveau, et on ajoute ensuite du (NH₄)₂CO₃ jusqu'à ce qu'un précipité qui apparaît soit complet,
- on sépare le précipité de la solution, si nécessaire on le lave et on le place dans l'acide chlorhydrique ou l'acide phosphorique.

11. Procédé selon la revendication 9 ou 10, **caractérisé en ce que** l'on extrait la solution d'acide chlorhydrique ou d'acide phosphorique produite selon l'étape e) avec un solvant organique, en particulier avec un éther, puis on la neutralise dans une solution aqueuse alcaline à action oxydante et on récupère le précipité ainsi formé et on le dissout ensuite dans l'acide chlorhydrique ou l'acide phosphorique.

12. Procédé selon la revendication 11, dans lequel on traite le précipité dissous dans l'acide chlorhydrique ou l'acide phosphorique avec du Na₂HPO₄ et on sépare le produit de précipitation, puis on fait réagir la solution restante avec de l'ammoniac et un agent oxydant, en particulier du H₂O₂, dans lequel les ions lanthanide présents précipitent sous forme d'hydroxydes, que l'on sépare et que l'on dissout ensuite dans l'acide chlorhydrique.

13. Procédé selon l'une quelconque des revendications précédentes, dans lequel
f-1 on fait réagir la solution d'acide chlorhydrique ou d'acide phosphorique produite selon l'étape e) avec de l'acide oxalique ou un oxalate, de telle manière que les ions lanthanide précipitent sous forme d'oxalates, puis on traite le précipité d'oxalates avec du NaOH en une quantité qui provoque la précipitation d'oxalate de sodium, tandis que les ions lanthanide passent en solution, on sépare ensuite le précipité de la solution et on traite la solution avec de l'acide nitrique, ce qui fait précipiter le CeO₂ tandis que d'autres ions lanthanide éventuels restent en solution.

14. Procédé selon l'une quelconque des revendications précédentes, dans lequel
f-2 on soumet la solution d'acide chlorhydrique ou d'acide nitrique produite selon l'étape e) ou selon f-1 à une extraction liquide-liquide avec un acide sulfurique ou phosphorique organique dissous dans un solvant non polaire, dans lequel les ions lanthanide passent dans la phase organique sous la forme de composés complexes, puis on précipite ceux-ci à l'aide d'acide chlorhydrique sous la forme de leurs chlorures.

15. Procédé selon la revendication 14, dans lequel on effectue l'extraction à l'aide d'un extracteur centrifuge.
